# DEMANDE DE BREVET EUROPEEN

(11) **EP 1 686 512 A1**
(43) Date de publication de la demande: **02.08.2006**
(21) Numéro de dépôt: 05100694.8
(22) Date de dépôt: 01.02.2005
(51) Int. Cl.: G06K 19/077

(54) **Procédé de placement d'un ensemble électronique sur un substrat et dispositif de placement d'un tel ensemble**

(71) Demandeur: NagraID S.A., 2301 La Chaux-de-Fonds (CH)
(72) Inventeur: DROZ, François, 2300, La Chaux-de-Fonds (CH)
(74) Mandataire: Wenger, Joel-Théophile

(57) **Abrégé**

Le but de la présente invention est d'assurer une précision maximale tant au niveau de la fabrication d'un ensemble électronique à partir d'une puce de petites dimensions qu'à celui du placement d'un tel ensemble sur un substrat isolant.

Ce but est atteint par un procédé de placement sur un support généralement plan, appelé substrat (7), d'au moins un ensemble électronique constitué d'une puce (4) comportant au moins un contact électrique (5, 5') sur l'une de ses faces, ledit contact (5, 5') étant connecté à un segment (3,3') de piste conductrice, ledit placement étant effectué au moyen d'un dispositif de pose (6) maintenant et positionnant ledit ensemble sur le substrat (7), caractérisé en ce qu'il comprend les étapes suivantes:
- formation d'un segment (3, 3') de piste conductrice ayant un contour prédéterminé,
- transfert du segment (3, 3') de piste sur le dispositif de pose (6),
- saisie de la puce (4) avec le dispositif de pose (4) portant le segment (3, 3') de piste de sorte qu'une extrémité dudit segment (3, 3') de piste se place sur un contact (5, 5') de la puce (4).
- placement de l'ensemble électronique constitué de la puce (4) et du segment (3, 3') de piste à une position prédéterminée sur le substrat (7),
- enfoncement de la puce (4) et du segment (3, 3') de piste dans le substrat (7).

Le dispositif de pose est caractérisé en ce qu'il comporte une tête monolithique pourvue de moyens de maintien d'au moins un segment (3, 3') de piste conductrice, lesdits moyens de maintien étant solidaires à des moyens de saisie et de retenue d'une puce (4) de sorte qu'une extrémité du segment (3, 3') de piste se connecte à un contact (5, 5') de la puce (4).

## Description

### Domaine technique

La présente invention concerne le domaine de l'assemblage de transpondeurs, de carte à puce, de circuits intégrés ou autre support de données numériques et plus particulièrement le placement, le montage et la connexion d'ensembles électroniques sur un support isolant plus couramment appelé substrat.

### Art antérieur

On entend par ensemble électronique un composant sous la forme d'une puce semiconductrice munie sur l'une de ses faces de plages de contacts électriques sur lesquels sont disposées des segments de pistes conductrices prolongeant lesdits contacts. Ces segments de pistes constituent des connexions reliant la puce à des éléments externes localisés sur le substrat. Par exemple, dans un transpondeur les segments de pistes de l'ensemble servent à le connecter aux extrémités d'une antenne disposée sur le pourtour du substrat.

Il existe plusieurs procédés de placement et de connexion d'une puce ou d'un ensemble électronique sur un substrat comportant des pistes conductrices à savoir.

Le document EP0694871 décrit un procédé de placement d'une puce effectué à l'aide d'un outil de pressage à chaud. La puce est saisie par l'outil, la face comportant les contacts étant dirigée vers le haut, puis pressée à chaud dans la matière du substrat. La face comportant les contacts affleure la surface du substrat. Les connexions sont réalisées par sérigraphie ou par traçage de pistes au moyen d'une encre conductrice reliant les contacts de la puce à une antenne par exemple. Selon une variante, un segment de piste est posé sur le substrat et la puce est pressée à chaud avec la face portant les contacts dirigée vers le substrat de manière à réaliser une connexion par la pression d'un contact de ladite puce sur le segment de piste.

Dans le document WO98/26372, la puce comporte des contacts en relief et elle est posée avec la face portant les contacts dirigée vers le substrat. Les contacts de la puce sont appliqués contre des bornes conductrices d'une antenne imprimée sur le substrat. Une feuille intermédiaire en matière plastique est superposée sur le substrat ainsi équipé en recouvrant la puce. Une seconde feuille recouvre le substrat avant le laminage à chaud de cet assemblage de feuilles. Ce procédé appelé technique de la "puce retournée" ou "flip chip" permet de réaliser en une seule opération la pose et la connexion de la puce et de garantir une épaisseur minimale à l'assemblage.

Le document WO98/44452 décrit un procédé de fabrication d'une carte à puce comprenant au moins un microcircuit dans le substrat de la carte. Le microcircuit est posé de sorte que les plots de sortie soient dirigés vers le haut. La connexion des plots avec des contacts d'une antenne situés sur la surface du substrat est effectuée par dépôt d'encre conductrice au moyen d'une seringue. Le microcircuit est posé au fond d'une cavité de profondeur plus grande que son épaisseur de manière à laisser un espace permettant de recouvrir ledit microcircuit de résine après réalisation des connexions. Ces dernières épousent le profil du microcircuit et celui de la cavité avant d'aboutir aux contacts ou aux pistes imprimées sur la surface du substrat.

Dans le procédé du document EP1410322, un module complet comprenant une puce équipée de plages de contact est placé à partir d'une bande support sur un substrat, comportant des pistes conductrices imprimées, également disposé en bande. Un module parmi ceux fixés sur la bande est placé en regard d'une portion de bande munie d'un ensemble de pistes conductrices formant, par exemple, une antenne. Puis, il est détaché de la bande pour être collé sur le substrat à proximité des terminaisons de l'antenne. La connexion des plages de contacts du module à l'antenne est effectuée par pression et sertissage avec un dispositif approprié lors du collage du module.

L'inconvénient principal des procédés de placement et de connexion ci-dessus est leur précision insuffisante surtout lorsque les dimensions de la puce formant l'ensemble électronique sont très réduites, par exemple 0.2 mm sur 0.2 mm. De plus, la distance très faible, de l'ordre de 0.05 mm, séparant les segments de piste attachés aux contacts de la puce, nécessite une grande précision de positionnement et de connexion.

Dans les trois premiers exemples, une puce ou un microcircuit seul est placé sur le substrat soit avec les contacts pressés sur des pistes imprimées sur une face du substrat (puce retournée), soit avec les contacts apparents connectés ultérieurement. Ces deux types de procédés deviennent peu fiables lorsque la taille de la puce et celle des contacts diminue.

Dans le dernier exemple, les modules sont fabriqués séparément et disposés sur une bande avant d'être posés sur le substrat. Ce procédé s'est aussi révélé relativement lent et coûteux.

### Description sommaire de l'invention

Le but de la présente invention est d'assurer une précision maximale tant au niveau de la fabrication d'un ensemble électronique à partir d'une puce de petites dimensions qu'à celui du placement d'un tel ensemble sur un substrat isolant. Un autre but est d'atteindre un coût de production de transpondeurs très bas avec une cadence de fabrication élevée de l'ordre d'une pièce par seconde.

Ces buts sont atteints par un procédé de placement sur un support généralement plan, appelé substrat, d'au moins un ensemble électronique constitué d'une puce comportant au moins un contact électrique sur l'une de ses faces, ledit contact étant connecté à un segment de piste conductrice, ledit placement étant effectué au moyen d'un dispositif de pose maintenant et positionnant ledit ensemble sur le substrat, caractérisé en ce qu'il comprend les étapes suivantes:
- formation d'un segment de piste conductrice ayant un contour prédéterminé
- transfert du segment de piste sur le dispositif de pose
- saisie de la puce avec le dispositif de pose portant le segment de piste de sorte qu'une extrémité dudit segment de piste se place sur au moins un contact de la puce.
- placement de l'ensemble électronique constitué de la puce munie du segment de piste à une position prédéterminée sur le substrat,
- enfoncement de la puce et du segment de piste dans le substrat.

Selon une réalisation préférée, le segment de piste est étampé à partir d'une feuille de matériau conducteur à l'aide d'un outil d'étampage puis transférée sur le dispositif de pose qui le maintient par exemple au moyen d'un dispositif d'aspiration d'air. En général, le nombre de segments de piste étampés en une opération correspond au nombre de contacts de la puce. Ils sont maintenus par le dispositif de pose selon un arrangement dépendant de la disposition des contacts sur la puce. Leur forme et leurs dimensions individuelles sont aussi déterminées par la configuration des contacts de la puce ainsi que par celle des pistes conductrices du substrat.

Le dispositif de pose sur lequel sont fixés les segments de piste saisit une puce, également par aspiration selon une réalisation, les extrémités des segments de piste étant appliquées contre les contacts de la puce. Cet ensemble est ensuite positionné et pressé à l'endroit prévu sur le substrat, les extrémités libres des segments de pistes se connectant aux terminaisons d'un circuit présent sur le substrat (par exemple, une antenne).

L'objet de la présente invention consiste également en un dispositif de pose destiné à placer sur un substrat un ensemble électronique comprenant une puce munie d'au moins un contact électrique connecté à un segment de piste conductrice, ledit dispositif étant équipé de moyens de positionnement et de pressage de l'ensemble électronique sur le substrat est caractérisé en ce qu'il comporte une tête monolithique pourvue de moyens de maintien d'au moins un segment de piste conductrice, lesdits moyens de maintien étant solidaires à des moyens de saisie et de retenue d'une puce de sorte qu'une extrémité du segment de piste se connecte à un contact de la puce.

Les moyens de maintien du segment de piste sont constitués de préférence d'un dispositif d'aspiration d'air créant un vacuum sur l'une des faces du segment de piste. Un dispositif similaire peut être également prévu pour prendre une puce avec une extrémité du segment de piste appliquée contre un contact de la puce. L'ensemble ainsi monté est transporté vers un emplacement prédéterminé du substrat où il sera implanté. Le dispositif de pose comprend aussi des moyens de pressage de l'ensemble dans le substrat.

Un avantage de l'invention est d'éviter la réalisation d'un module intermédiaire par le fait que l'ensemble électronique est assemblé par le biais du dispositif de pose avant son placement sur le substrat.

### Description des figures

L'invention sera mieux comprise grâce à la description détaillée qui va suivre et qui se réfère aux dessins annexés qui sont donnés à titre d'exemple nullement limitatif, dans lesquels:
La figure 1 illustre l'étampage des segments de piste à partir d'une bande de matériau conducteur et une vue schématique de dessus en transparence du dispositif de pose maintenant une puce et les segments de piste.
La figure 2 illustre une vue agrandie en coupe de l'ensemble électronique constitué de la puce et des segments de piste.
La figure 3 montre une vue de dessus d'une portion de substrat où l'ensemble est placé et connecté à des pistes imprimées.
La figure 4 montre une vue agrandie en coupe de la portion de substrat de la figure 3
La figure 5 montre une vue schématique de dessous de la tête du dispositif de pose maintenant les segments de piste et la puce.
La figure 6 illustre une variante où les segments de pistes sont étampés à partir d'une bande conductrice munie de zones isolantes.
La figure 7 montre une vue de dessus d'une portion de substrat où les segments de pistes de l'ensemble munies de zones isolantes croisent et/ou se superposent à d'autres pistes du substrat.
La figure 8 montre une vue de dessus d'une portion de substrat où les segments de pistes de l'ensemble de plus grande longueur et munies de zones isolantes sont collées sur le substrat en croisant des pistes.

### Description détaillée de l'invention

Selon le procédé de l'invention, chaque ensemble électronique est monté avant son placement et sa connexion avec d'autres éléments présents sur le substrat. Des segments (3, 3') de pistes dont le nombre correspond en général au nombre de contacts (5, 5') de la puce (4) sont découpés dans une feuille (2) de matériau conducteur puis assemblés sur ces contacts (5, 5').

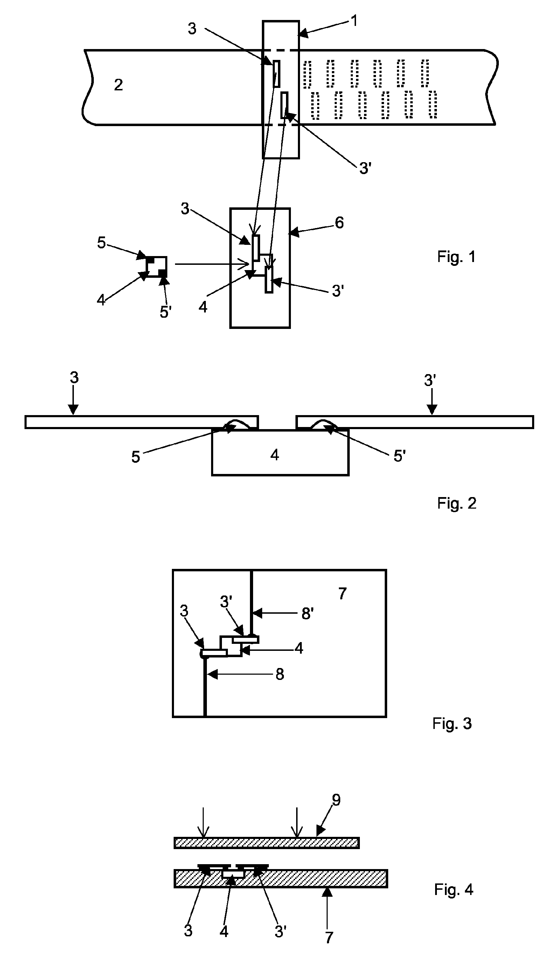

La figure 1 montre un exemple d'une paire de segments (3, 3') de piste rectangulaires disposés en quinconce étampée dans une bande (2) de cuivre par exemple. L'outil d'étampage (1) opère ici de bas en haut et repousse les segments (3, 3') découpés à sa surface supérieure de manière à pouvoir être transférés aisément sur le dispositif de pose (6). Ce dernier se place au-dessus de l'outil d'étampage (1) et aspire les segments (3, 3') en les maintenant dans la même position que lors de leur étampage. Une puce (4) électronique est ensuite saisie par le dispositif de pose (6) portant les segments (3, 3') de manière à ce que ses contacts (5, 5') touchent les extrémités les plus proches de chaque segment (3, 3') dans une zone centrale de la tête du dispositif de pose (6). La puce (4) est également maintenue sur le dispositif par aspiration de façon similaire aux segments de piste (3, 3').

L'ensemble ainsi formé porté par le dispositif de pose (6) est ensuite placé puis pressé, par exemple à chaud, dans un substrat (7) par le même dispositif. La surface de contact de l'ensemble étant dirigée vers le haut, affleure la surface du substrat (7) comme le montre la coupe de la figure 4 et les segments (3, 3') de piste sont posés à plat contre la surface du substrat (7).

Les extrémités libres des segments (3, 3') sont connectées par pression sur des terminaisons appropriées formées par des pistes (8, 8') conductrices disposées sur le substrat (7), voir la figure 3.

Dans une étape finale de l'assemblage, une feuille isolante (9) de protection est laminée, selon une technique connue, sur tout ou partie de la surface du substrat (7) assurant un maintien mécanique final de l'ensemble électronique constitué des segments (3, 3') de piste et de la puce (4), les connexions électriques ayant été réalisées au préalable.

Ce procédé de pose s'applique avantageusement, par exemple, lors de la fabrication de transpondeurs ou de cartes à puce sans contact où l'ensemble électronique est connecté aux extrémités d'une antenne.

La figure 2 montre une coupe d'un ensemble constitué d'une puce (4) comportant deux contacts (5, 5') munis chacun d'une protubérance. La connexion des segments (3, 3') de piste est effectuée par pression de sorte que les protubérances réalisent le contact électrique avec la matière conductrice du segment.

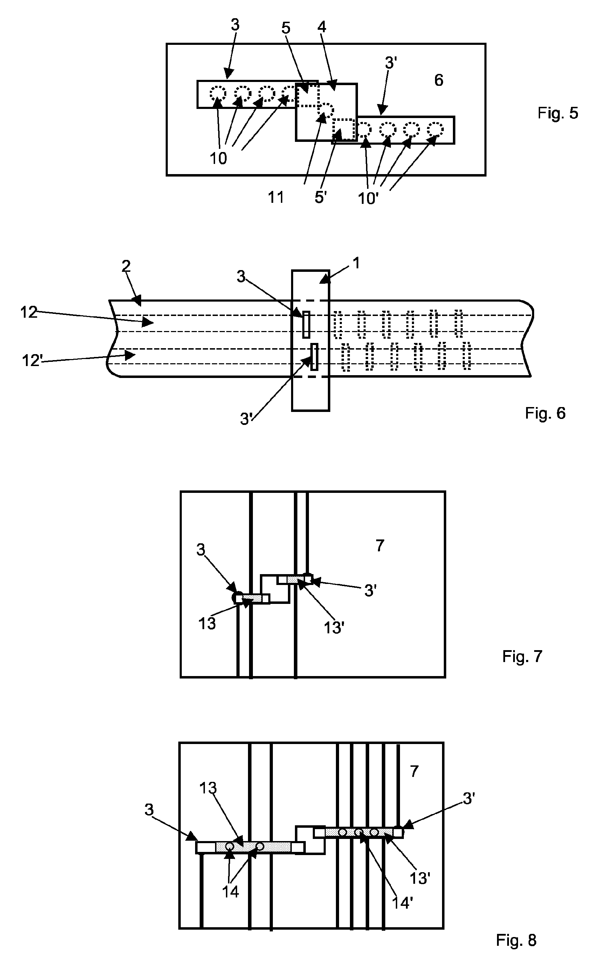

La figure 5 représente une vue schématique de dessous de la tête du dispositif de pose (6) selon l'invention équipée d'orifices (10, 10', 11) destinés à maintenir par aspiration d'air (vacuum) les différents éléments de l'ensemble électronique. Dans une première étape l'aspiration de l'air par les orifices (10, 10') permet de recueillir les segments (3, 3') de piste sur l'outil d'étampage (1) et de les maintenir en position. Dans une seconde étape, la puce (4) est saisie depuis un support adéquat également par aspiration de l'air au travers d'un orifice central (11). L'ensemble électronique ainsi constitué et retenu par le dispositif de pose est finalement transporté vers l'emplacement prévu sur le substrat (7) et pressé dans la matière.

La figure 6 montre une variante où la bande conductrice (2) dans laquelle sont étampés les segments (3, 3') de piste est pourvue de zones (12, 12') isolantes appliquées contre la face inférieure de la bande. Ces zones (12, 12') sont disposées de manière à former une partie médiane isolée (13, 13'), sur la face destinée à être appliquée contre le substrat, de chaque segment étampé à partir de cette bande (2). Les extrémités des segments (3, 3') sont dégagées de la zone isolante afin d'assurer les connexions avec la puce (4) et les pistes ou les plages conductrices du substrat (7) prévues à cet effet. Cette isolation permet d'éviter des courts-circuits avec les pistes (8, 8') du substrat (7) que les segments croisent dans certaines configurations, comme illustré par la figure 7.

Selon une variante, les zones isolantes sur les segments peuvent être réalisées à partir de segments isolants obtenus d'une façon similaire aux segments conducteurs mais à partir d'un film isolant. Ces segments sont transférés sur le dispositif de pose sur lequel ils sont maintenus contre les segments de piste appropriés avant le placement et l'enfoncement de l'ensemble dans le substrat.

Selon une autre variante illustrée par la figure 8, dans le cas où les segments (3, 3') auraient une longueur plus importante, le film isolant de la bande conductrice (2) peut comporter une couche de colle. Cette dernière, une fois activée, permet d'assurer le maintien du segment sur le substrat lorsqu'il croise plusieurs pistes par exemple. La couche de colle peut également être disposée sur le substrat (7) au lieu d'être appliquée sur le film isolant.

Lors de la pose de l'ensemble, les segments (3, 3') sont collés sur le substrat (7), par exemple, grâce à l'activation par un échauffement local de la couche de colle par le dispositif de pose (6) en des points (14, 14') situés en regard de la zone isolante. Ces points (14, 14') sont situés de préférence en dehors des pistes du substrat (7) permettant ainsi un meilleur collage.

Selon une variante, les opérations d'étampage des segments (3, 3') de pistes conductrices et de placement de l'ensemble peuvent être effectuées par le même dispositif. Dans ce cas, la tête du dispositif se complète par une étampe servant à la découpe des segments de pistes (3, 3'). Un retrait de l'étampe permet aux orifices (10, 10') d'aspiration de maintenir les segments (3, 3') dans la position adéquate avant la prise de la puce (4). L'étape de transfert des segments (3, 3') de pistes de l'outil d'étampage vers le dispositif de pose est alors supprimée.

Selon une autre variante, les moyens de saisie et de retenue de la puce comprennent des éléments adhésifs remplaçant le ou les orifices (11) dans la zone centrale du dispositif de pose (6). La puce (4) est alors collée temporairement entre ses contacts (5, 5') durant le transport de l'ensemble électronique vers son emplacement sur le substrat (7). Les éléments adhésifs ont une force de collage plus faible que celle de fixation de la puce (4) sur le substrat (7) de manière à permettre le retrait du dispositif de pose (6) après l'enfoncement de l'ensemble électronique. La colle peut subsister sur la puce (4) après la pose dans le but d'améliorer la planéité de la surface de l'ensemble électronique dans le cas où la puce (4) comporterait des contacts (5, 5') à protubérances.

Il est à noter que des éléments adhésifs conducteurs peuvent également être ajoutés sur le dispositif de pose (6) en regard des contacts de la puce (4). Ceux-ci peuvent soit remplacer les éléments adhésifs de la zone centrale, soit les compléter.

## Revendications

1. Procédé de placement sur un support généralement plan, appelé substrat (7), d'au moins un ensemble électronique constitué d'une puce (4) comportant au moins un contact électrique (5, 5') sur l'une de ses faces, ledit contact (5, 5') étant connecté à un segment (3,3') de piste conductrice, ledit placement étant effectué au moyen d'un dispositif de pose (6) maintenant et positionnant ledit ensemble sur le substrat (7), **caractérisé en ce qu'**il comprend les étapes suivantes:
- formation d'un segment (3, 3') de piste conductrice ayant un contour prédéterminé,
- transfert du segment (3, 3') de piste sur le dispositif de pose (6),
- saisie de la puce (4) avec le dispositif de pose (4) portant le segment (3, 3') de piste de sorte qu'une extrémité dudit segment (3, 3') de piste se place sur un contact (5, 5') de la puce (4).
- placement de l'ensemble électronique constitué de la puce (4) et du segment (3, 3') de piste à une position prédéterminée sur le substrat (7),
- enfoncement de la puce (4) et du segment (3, 3') de piste dans le substrat (7).

2. Procédé selon la revendication 1 **caractérisé en ce que** l'enfoncement de la puce (4) et du segment (3, 3') de piste dans le substrat (7) assure les connexions électriques.

3. Procédé selon la revendication 1 **caractérisé en ce que** le segment (3, 3') de piste est obtenu à partir d'une feuille (2) de matériau conducteur puis transféré sur le dispositif de pose (6) qui le maintient.

4. Procédé selon la revendication 1 **caractérisé en ce qu'**un segment isolant est obtenu à partir d'un film isolant puis transféré sur le dispositif de pose (6) qui le maintient contre le segment (3, 3') de piste, ledit segment isolant formant une zone isolante (13, 13') sur le segment de piste (3, 3').

5. Procédé selon la revendication 1 **caractérisé en ce que** lors de la saisie, la face de la puce (4) comportant le contact (5, 5') est dirigée vers le dispositif de pose (6) et que ledit contact (5, 5') est placé en regard d'une extrémité du segment (3, 3') de piste porté par ledit dispositif de pose (6).

6. Procédé selon la revendication 1 **caractérisé en ce que** l'ensemble est placé de sorte que la surface de la puce (4) portant les contacts (5, 5') affleure la surface du substrat (7) et que le segment (3, 3') de piste soit appliqué contre la surface du substrat (7).

7. Procédé selon la revendication 3 **caractérisé en ce que** la feuille (2) de matériau conducteur comporte un film isolant (12, 12') appliqué contre sa face inférieure.

8. Procédé selon la revendication 7 **caractérisé en ce que** le segment (3, 3') est obtenu à partir de ladite feuille (2) de manière à comporter une zone isolante (13, 13') sur la partie médiane de sa face inférieure destinée à être appliquée contre le substrat (7), les extrémités dudit segment (3, 3') étant dégagées de la zone isolante (13, 13').

9. Procédé selon la revendication 7 **caractérisé en ce que** le film (12, 12') isolant est enduit d'une colle s'activant par échauffement local.

10. Procédé selon la revendication 9 **caractérisé en ce que** lors du placement de l'ensemble sur le substrat (7), le dispositif de pose (6) échauffe le segment (3, 3') de piste en des points (14, 14') situés en regard de la zone isolante (13, 13') entraînant une activation de la colle et le maintien du segment (3, 3') sur le substrat (7).

11. Dispositif de pose (6) destiné à placer sur un substrat (7) un ensemble électronique comprenant une puce (4) munie d'au moins un contact (5, 5') électrique connecté à un segment (3, 3') de piste conductrice, ledit dispositif étant équipé de moyens de positionnement et de pressage de l'ensemble électronique sur le substrat (7) est **caractérisé en ce qu'**il comporte une tête monolithique pourvue de moyens de maintien d'au moins un segment (3, 3') de piste conductrice, lesdits moyens de maintien étant solidaires à des moyens de saisie et de retenue d'une puce (4) de sorte qu'une extrémité du segment (3, 3') de piste se connecte à un contact (5, 5') de la puce (4).

12. Dispositif selon la revendication 11 **caractérisé en ce que** les moyens de maintien du segment de piste (3, 3') sont constitués d'orifices (10, 10') d'aspiration d'air créant un vacuum sur l'une des faces du segment (3, 3') de piste maintenant ledit segment (3, 3') sur la tête dudit dispositif.

13. Dispositif selon les revendications 11 et 12 **caractérisé en ce que** les moyens de saisie et de retenue de la puce comprennent au moins un orifice (11) d'aspiration d'air situé dans une zone centrale de la tête dudit dispositif au voisinage d'une extrémité du segment (3, 3') de piste maintenu par les orifices (10, 10') correspondants.

14. Dispositif selon la revendication 11 **caractérisé en ce que** les moyens de saisie et de retenue de la puce (4) comprennent des éléments adhésifs.
